# EUROPÄISCHE PATENTSCHRIFT

(11) **EP 1 015 519 B1**
(45) Veröffentlichungstag und Bekanntmachung des Hinweises auf die Patenterteilung: **11.12.2002**
(21) Anmeldenummer: 98945298.2
(22) Anmeldetag: 29.08.1998
(51) Int. Cl.: C09D 5/02, C09D 133/14

(54) **PULVERKLARLACKDISPERSION**
POWDER VARNISH DISPERSION
DISPERSION DE VERNIS EN POUDRE

(30) Priorität: 20.09.1997 DE 19741555; 09.10.1997 DE 19744561; 17.07.1998 DE 19832107
(43) Veröffentlichungstag der Anmeldung: 05.07.2000
(73) Patentinhaber: BASF Coatings AG, 48165 Münster (DE)
(72) Erfinder: SCHWARTE, Stephan, D-48282 Emsdetten (DE); WOLTERING, Joachim, D-48159 Münster (DE); BAUMGART, Hubert, D-48163 Münster (DE)
(74) Vertreter: Fitzner, Uwe, Dr.
(86) Internationale Anmeldenummer: EP9805512
(87) Internationale Veröffentlichungsnummer: WO99015593

(56) Entgegenhaltungen:
- WO-A-96/32452

## Beschreibung

Die vorliegende Erfindung betrifft einen Pulverklarlack und eine wäßrige Pulverklarlack-Dispersion, die sich insbesondere als Überzug für mit Wasserbasislack beschichtete Automobilkarosserien eignet.

Für die Beschichtung von Automobilkarosserien werden heute vorzugsweise Flüssiglacke verwendet. Diese verursachen zahlreiche Umweltprobleme aufgrund ihres Lösemittelgehaltes. Dies gilt auch für die Fälle des Einsatzes von Wasserlacken.

Aus diesem Grund sind in den letzten Jahren vermehrte Anstrengungen unternommen worden, für die Beschichtung Pulverlacke zu verwenden. Die Ergebnisse sind jedoch bisher nicht zufriedenstellend, insbesondere zeigen Pulverklarlacke noch Schwächen hinsichtlich der Chemikalienbeständigkeit und der Vergilbung. Epoxy/Carboxy vernetzte Pulverklarlacke zeigen einen deutlich schlechtere Anätzbeständigkeit gegenüber Wasser, Baumharz und Schwefelsäure.

Viele Entwicklungen haben inzwischen das Ziel, Pulverlacke in Form wäßriger Dispersionen zu entwickeln, die sich mit Flüssiglacktechnologien verarbeiten lassen. Aus der US-Patentschrift 4268542 ist beispielsweise ein Verfahren bekannt, bei dem eine Pulverlack-Slurry verwendet wird, die sich für die Beschichtung von Automobilen eignet. Hierbei wird zunächst eine herkömmliche Pulverschicht auf die Karosserie aufgetragen und als zweite Schicht die Klarlack-Slurry. Bei dieser Klarlack-Slurry auf Basis von Acrylatharzen werden ionische Verdicker verwendet, welche zu einer relativ hohen Empfindlichkeit der applizierten Lackschicht gegen Feuchtigkeit, insbesondere gegen Schwitzwasser, führen. Ferner weisen diese in einem der Beispiele einen Gehalt von 0,5 bis 30 % an glycidylhaltigen Monomeren auf. Zudem muß mit hohen Einbrenntemperaturen (über 160° C) gearbeitet werden.

Im folgenden wird der Begriff Pulverklarlack-Dispersion als Synonym für Pulver-Klarlack-Slurry verwendet.

Aus der DE-OS 196 13 547 ist eine wäßrige Pulverlack-Dispersion bekannt, die die genannten Anforderungen erfüllt. Die dort beschriebene Pulverklarlackdispersion zeigt jedoch nach der Applikation und Vernetzung ebenso wie die bisher bekannten festen Pulverklarlacke geringe Werte hinsichtlich der Anätzbeständigkeit gegenüber Wasser, Baumharz und Schwefelsäure auf. Außerdem zeigt das System eine Neigung zur Vergilbung.

Die vorliegende Erfindung hat sich nunmehr die Aufgabe gestellt, eine wäßrige Pulverlackdispersion zur Verfügung zu stellen,
enthaltend
eine feste, pulverförmige Komponente A und eine wäßrige Komponente B, wobei
Komponente A ein Pulverklarlack ist enthaltend
a) wenigstens ein epoxidhaltiges Bindemittel mit einem Gehalt von 30 bis 45 %, vorzugsweise 30 bis 35 % an glycidylhaltigen Monomeren ggf. mit einem Gehalt an vinylaromatischen Verbindungen, vorzugsweise Styrol,
b) Tris(alkoxycarbonylamino)Triazin und Polycarbonsäuren, vorzugsweise geradkettige, aliphatische Dicarbonsäuren und/oder carboxyfunktionelle Polyester als Vernetzungsmittel und
c) ggf. Katalysatoren, Hilfsstoffe, pulverklarlacktypische Additive, wie Entgasungsmittel, Verlaufsmittel, UV-Absorber, Radikalfänger, Antioxidantien
und
Komponente B. eine wässrige Dispersion ist enthaltend
a) wenigstens einen nicht-ionischen Verdicker und
b) ggf. Katalysatoren, Hilfsstoffe, Entschäumungsmittel, Dispersionshilfsmittel, Netzmittel,
   vorzugsweise carboxyfunktionelle Dispergiermittel, Antioxidantien, UV-Absorber,
   Radikalfänger, geringe Mengen Lösemittel, Verlaufsmittel, Biozide und/oder Wasserrückhaltemittel.

Vorzugsweise liegt der Gehalt an glycidylhaltigen bei 25 bis 45%. Besonderders bevorzugt sind 30 bis 45 Gew.%, insbesondere 30 bis 40%. Ganz besonders bevorzugt sind 30 bis 35%. Höchst bevorzugt sind 26-35%, insbesondere 27 bis 33%.

Bevorzugt werden hierbei folgende Mengenverhältnisse:
a) 60 - 80 Teile
b) 15-30 Teile
c) 3-10 Teile

Als epoxifunktionelles Bindemittel für den festen Pulverklarlack sind beispielsweise epoxidgruppenhaltige Polyacrylatharze geeignet, die durch Copolymerisation von mindestens einem ethylenisch ungesättigten Monomer, das mindestens eine Epoxidgruppe im Molekül enthält, mit mindestens einem weiteren ethylenisch ungesättigten Monomer, das keine Epoxidgruppe im Molekül enthält, herstellbar sind, wobei mindestens eines der Monomere ein Ester der Acrylsäure oder Methacrylsäure ist. Derartige epoxidgruppenhaltige Polyacrylatharze sind z.B.bekannt aus EP-A-299 420, DE-B-22 14 650, DE-B-27 49 576, US-A-4,091,048 und US-A-3,781,379.

Als Beispiele für ethylenisch ungesättigte Monomere, die keine Epoxidgruppe im Molekül enthalten, werden Alkylester der Acryl- und Methacrylsäure, die 1 bis 20 Kohlenstoffatome im Alkylrest enthalten, insbesondere Methylacrylat, Methylmethacrylat, Ethylacrylat, Ethylmethacrylat, Butylacrylat, Butylmethacrylat, 2-Ethylhexylacrylat und 2-Ethylhexylmethacrylat genannt. Weitere Beispiele für ethylenisch ungesättigte Monomere, die keine Epoxidgruppen im Molekül enthalten, sind Säureamide, wie z.B. Acrylsäure- und Methacrylsäureamid, vinylaromatische Verbindungen, wie Styrol, Methylstyrol und Vinyltoluol, Nitrile, wie Acrylnitril und Methacrylnitril, Vinyl- und Vinylidenhalogenide, wie Vinylchlorid und Vinylidenfluorid, Vinylester, wie z.B. Vinylacetat und hydroxylgruppenhaltige Monomere, wie z.B. Hydroxyethylacrylat und Hydroxyethylmethacrylat.

Die in den epoxidfunktionellen Bindemitteln eingesetzten epoxidfunktionellen Monomere sind vorzugsweise Glycidylacrylat, Glycidylmethacrylat und Allylglycidylether.

Das epoxidgruppenhaltige Polyacrylatharz weist üblicherweise ein Epoxidäquivalentgewicht von 300 bis 2500, vorzugsweise 420 bis 700, ein zahlenmittleres Molekulargewicht (gelpermeationschromatographisch unter Verwendung eines Polystyrolstandards bestimmt) von 2.000 bis 20.000, vorzugsweise von 3.000 bis 10.000, und eine Glasübergangstemperatur (T_{G}) von 30 bis 80, vorzugsweise von 40 bis 70, besonders bevorzugt von 40 bis 60°C auf (gemessen mit Hilfe der Differential Scanning Calorimetrie (DSC)). Ganz besonders bevorzugt werden ca. 50°C. Zum Einsatz können auch Gemische aus zwei oder mehr Acrylatharzen kommen.

Das epoxidgruppenhaltige Polyacrylatharz kann nach allgemein gut bekannten Methoden durch Polymerisation hergestellt werden.

Als Komponente (b) werden Tris(Alkoxycarbonylamino)Triazine gemäß der US-PS 4 939 213, der US-PS 5 084 541 und der EP 0 624 577 eingesetzt. Solche Verbindungen sind auch aus der DE 2509561 sowie Patent Abstracts of Japan, Publ.-Nr. 09194769 A bekannt. Allerdings werden die Tris(Alcoxycarbonylamino)Trizine dort nur für kationische

Elektrotauchlacke eingesetzt.

Erfindungsgemäß handelt es sich um Tris(Alkoxycarbonylamino)Triazine der Formel 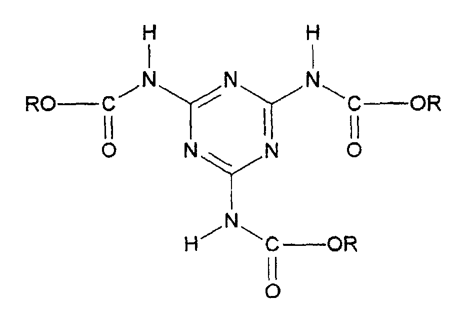 wobei R=Methyl, Butyl-, Ethylhexyl-Gruppen bedeuten. Ebenso können Derivate der genannten Verbindungen zum Einsatz kommen.

Erfindungsgemäß bevorzugt sind die Methyl-, Butyl-Mischester. Diese haben gegenüber der reinen Methylestern den Vorzug der besseren Löslichkeit, in Polymerschmelzen und Butyl-Ethylhexyl-Mischester. Bevorzugt sind erfindungsgemäß auch die reinen Butylester.

Die Tris(Alkoxycarbonylamino)Triazine und deren Derivate können erfindungsgemäß auch im Gemisch mit herkömmlichen Vernetzungsmitteln eingesetzt werden (Komponente C). Hier kommen insbesondere von den Tris(Alkoxycarbonylamino)Triazinen verschiedene blockierte Polyisocyanate in Betracht. Ebenso sind Aminoplastharze z.B. Melamine, einsetzbar. Die Tris(Alkoxycarbonylamino) Triazine können in Mengen von 1 bis 10, vorzugsweise 2 bis 10 Gew.% vorliegen.
Im Prinzip kann jedes für transparente Decklacke geeignete Aminoplastharz oder eine Mischung aus solchen Aminoplastharzen eingesetzt werden.

Derartige Harze sind dem Fachmann gut bekannt und werden von vielen Firmen als Verkaufsprodukte angeboten. Aminoplastharze sind Kondensationsprodukte aus Aldehyden, insbesondere Formaldehyd und beispielsweise Harnstoff, Melamin, Guanamin und Benzoguanamin. Die Aminoplastharze enthalten Alkohol-, vorzugsweise Methylolgruppen, die in der Regel teilweise oder vollständig mit Alkoholen verethert sind.

Als weitere Vernetzer sind Carbonsäuren, insbesondere gesättigte, geradkettige, aliphatische Dicarbonsäuren mit 3 bis 20 C-Atomen im Molekül geeignet. Ganz besonders bevorzugt wird Dodecan-1,12-disäure eingesetzt. Zur Modifizierung der Eigenschaften der fertigen Pulverklarlacke können ggf. noch andere Carboxylgruppen enthaltende Vernetzer eingesetzt werden. Als Beispiele hierfür seien gesättigte verzweigte oder ungesättigte geradkettige Di- und Polycarbonsäuren sowie Polymere mit Carboxylgruppen genannt.

Ferner sind auch Pulverklarlacke geeignet, die einen epoxifunktionellen Vernetzer und ein säurefunktionelles Bindemittel enthalten.

Als säurefunktionelles Bindemittel sind beispielsweise saure Polyacrylatharze geeignet, die durch Copolymerisation von mindestens einem ethylenisch ungesättigten Monomer, das mindestens eine Säuregruppe im Molekül enthält, mit mindestens einem weiteren ethylenisch ungesättigten Monomer, das keine Säuregruppe im Molekül enthält, herstellbar sind.

Das epoxidgruppenhaltige Bindemittel bzw. der carboxylgruppenhaltige Vernetzer und das Carboxyl- bzw. das Bindemittel werden üblicherweise in einer solchen Menge eingesetzt, daß pro Äquivalent Epoxidgruppen 0,5 bis 1,5, vorzugsweise 0,75 bis 1,25 Äquivalente Carboxylgruppen vorliegen. Die Menge an vorliegenden Carboxylgruppen kann durch Titration mit einer alkoholischen KOH-Lösung ermittelt werden.

Erfindungsgemäß enthält das Bindemittel vinylaromatische Verbindungen, insbesondere Styrol . Um die Gefahr der Rißbildung bei der Bewitterung zu begrenzen, liegt der Gehalt jedoch nicht über 35 Gew.-%. Bevorzugt werden 10 bis 25 Gew.-%.

Die festen Pulverlacke enthalten ggf einen oder mehrere geeignete Katalysatoren für die Epoxidharz-Aushärtung. Geeignete Katalysatoren sind Phosphoniumsalze organischer oder anorganischer Säuren, quarternäre Ammoniumverbindungen Amine, Imidazol und Imidazolderivate. Die Katalysatoren werden im allgemeinen in Anteilen von 0,001 Gew.-% bis etwa 2 Gew.-%, bezogen auf das. Gesamtgewicht des Epoxidharzes und des Vernetzungsmittels, eingesetzt.

Beispiele für geeignete Phosphonium-Katalysatoren sind Ethyltriphenylphosphoniumiodid, Ethyltriphenylphosphoniumchlorid, Ethyltriphenylphosphoniumthiocyanat, Ethyltriphenylphosphonium-Acetat-Essigsäurekomplex, Tetrabutylphosphoniumiodid, Tetrabutylphosphoniumbromid und Tetrabutylphosphonium-Acetat-Essigsäurekomplex. Diese sowie weitere geeignete Phosphonium-Katalysatoren sind z.B. beschrieben in US-PS 3,477,990 und US-PS 3,341,580.

Geeignete Imidazol-Katalysatoren sind beispielsweise 2-Styrylimidazol, 1-Benzyl-2-methylimidazol, 2-Methylimidazol und 2-Butylimidazol. Diese sowie weitere Imidazol-Katalysatoren sind z.B. beschrieben in dem belgischen Patent Nr. 756,693.

Außerdem können die festen Pulverlacke ggf. noch Hilfsmittel und Additive enthalten. Beispiele hierfür sind Verlaufsmittel, Antioxidantien, UV-Absorber, Radikalfänger, Rieselhilfen und Entgasungsmittel, wie beispielsweise Benzoin.

Die Herstellung der festen Pulverlacke erfolgt nach bekannten Methoden (vgl. z,.B. Produkt-Information der Firma BASF Lacke + Farben AG, "Pulverlacke", 1990) durch Homogenisieren und Dispergieren, beispielsweise mittels eines Extruders, Schneckenkneters u.ä.. Nach Herstellung der Pulverlacke werden diese durch Vermahlen und ggf. durch Sichten und Sieben für die Dispergierung vorbereitet.

Die beschriebene Komponente A wird erfindungsgemäß in der wäßrigen Komponente B dispergiert.

Vorzugsweise liegt der Gehalt an glycidylhaltigen Monomeren bei 25 bis 40%. Besonders bevorzugt sind Gehalte von 26 bis 35%. Höchst bevorzugt sind Gehalte von 27,5 bis 32,5%

Bevorzugt werden hierbei erfindungsgemäß folgende Mengenverhältnisse:
Komponente A
   a) 60-80 Teile
   b) 15-30 Teile
   c) 3-10 Teile
Komponente B
   20-50 Teile Komponente a
   80-50 Teile Komponente b
   1000-5000 Teile Destilliertes Wasser

Die Dispersion enthält vorzugsweise
25-100 Teile Komponente A
100 Teile Komponente B

Bevorzugt werden nicht-ionische Assoziativ-Verdicker a) eingesetzt. Strukturmerkmale solcher Assoziativ-Verdicker a) sind:
aa) ein hydrophiles Gerüst, das eine ausreichende Wasserlöslichkeit sicherstellt und
ab) hydrophobe Gruppen, die zu einer assoziativen Wechselwirkung im wäßrigen Medium fähig sind.

Als hydrophobe Gruppen werden beispielsweise langkettige Alkylreste, wie z.B. Dodecyl-, Hexadecyl- oder Octadecyl-Reste, oder Alkarylreste, wie z.B. Octylphenyl- oder Nonylphenyl-Reste eingesetzt.
Als hydrophile Gerüste werden vorzugsweise Polyacrylate, Celluloseether oder besonders bevorzugt Polyurethane eingesetzt, die die hydrophoben Gruppen als Polymerbausteine enthalten.
Ganz besonders bevorzugt sind als hydrophile Gerüste Polyurethane, die Polyetherketten als Bausteine enthalten, vorzugsweise aus Polyethylenoxid.
Bei der Synthese solcher Polyetherpolyurethane dienen die Di- und oder Polyisocyanate, bevorzugt aliphatische Diisocyanate, besonders bevorzugt ggf. alkylsubstituiertes 1,6-Hexamethylendiisocyanat, zur Verknüpfung der Hydroxylgruppen-terminierten Polyetherbausteine untereineinander und zur Verknüpfung der Polyetherbausteine mit den hydrophoben Endgruppenbausteinen, die beispielsweise monofunktionelle Alkohole und/oder Amine mit den schon genannten langkettigen Alkylresten oder Aralkylresten sein können.
Aus den Komponenten A und B kann durch Naßvermahlung oder durch Einrühren von trocken vermahlenem Pulverlack die wäßrige Pulverklarlackdispersion hergestellt werden. Besonders bevorzugt wird die Naßvermahlung.

Die vorliegende Erfindung betrifft demgemäß auch ein Verfahren zur Herstellung einer wäßrigen Pulverlackdispersion auf der Basis der beschriebenen Komponente A , die erfindungsgemäß in einer Komponente B dispergiert wird.

D. H., nach der Dispergierung der Komponente A in der Komponente B wird vermahlen, der pH-Wert auf 4,0 bis 7,0, vorzugsweise 5,5 bis 6,5 eingestellt und filtriert.

Die mittlere Korngröße liegt zwischen 1 und 25 µm, vorzugsweise unter 20 µm, besonders bevorzugt bei 2 bis 10µm. Der Festkörpergehalt der wäßrigen Pulverklarlackdispersion liegt zwischen 15 und 50 %.

Der Dispersion können vor oder nach der Naßvermahlung bzw. dem Eintragen des trockenen Pulverlackes in das Wasser 0 bis 5 Gew.% eines Entschäumergemisches, eines Ammonium- und/oder Alkalisalzes, eines carboxylfunktionellen oder nichtionischen Dispergierhilfsmittels, Netzmittels und/oder Verdickergemisches sowie der anderen Additive zugesetzt werden. Vorzugsweise werden Entschäumer, Dispergierhilfs-, Netz- und/oder Verdickungsmittel zunächst in Wasser dispergiert. Dann werden kleine Portionen des Pulverklarlackes eingerührt. Anschließend werden noch einmal Entschäumer, Dispergierhilfs-, Verdickungs- und Netzmittel eindispergiert. Abschließend werden nochmals in kleinen Portionen Pulverklarlacke eingerührt.

Die Einstellung des pH-Wertes erfolgt vorzugsweise mit Ammoniak oder Aminen. Der pH-Wert kann hierbei zunächst ansteigen, daß eine stark basische Dispersion entsteht. Der pH-Wert fällt jedoch innerhalb mehrerer Stunden oder Tage wieder auf die oben angeführten Werte.
Die Pulverklarlackdispersion läßt sich als Überzug von Basislacken, vorzugsweise in der Automobilindustrie, verwenden. Besonders geeignet ist die Klarlackdispersion für Wasserbasislacke auf Basis eines Polyesters, Polyurethanharzes und eines Aminoplastharzes.

Die Pulverklarlackdispersion läßt sich mit den aus der Flüssiglacktechnologie bekannten Methoden aufbringen. Insbesondere können sie mittels Spritzverfahren aufgebracht werden. Ebenso kommen elektrostatisch unterstützte Hochrotation oder pneumatische Applikation in Betracht.

Die auf die Basislackschicht aufgebrachten Pulverklarlackdispersionen werden regelmäßig vor dem Einbrennen abgelüftet. Dies geschieht zweckmäßigerweise zunächst bei Raumtemperatur und anschließend bei leicht erhöhter Temperatur. In der Regel beträgt die erhöhte Temperatur 40 bis 70°C, vorzugsweise 50 bis 65°C. Das Ablüften wird für 2 bis 10 Minuten, vorzugsweise 4 bis 8 Minuten bei Raumtemperatur durchgeführt. Bei erhöhter Temperatur wird nochmals während derselben Zeitspanne abgelüftet.

Das Einbrennen kann bereits bei Temperaturen von 130°C durchgeführt werden. Durchführbar ist das Einbrennen bei 130 bis 180°C, vorzugsweise 135 bis 155°C.

Mit dem erfindungsgemäßen Verfahren können Schichtdicken von 30 bis 50, vorzugsweise 35 bis 45 µm erreicht werden. Klarlacke mit vergleichbarer Qualität konnten bisher nach dem Stand der Technik unter Einsatz von Pulverklarlacken nur durch Auftrag von Schichtdicken von 65 bis 80 µm erreicht werden. Es ist insbesondere überraschend, daß mit dem erfindungsgemäß eingesetzten Vernetzer die Anätzbeständigkeit gegenüber Wasser, Baumharz und Schwefelsäure verbessert und die Vergilbungsneigung signifikant reduziert wird.

Im folgenden wird die Erfindung unter Bezugnahme auf die Beispiele näher beschrieben:
1. Herstellung des Acrylatharzes
   21,1 Teile Xylol werden vorgelegt und auf 130°C erwärmt. Zu der Vorlage werden bei 130°C binnen 4 h über zwei getrennte Zulaufbehälter Initiator: 4,5 Teile TBPEH (tert.-Butylperethylhexanoat) gemischt mit 4,86 Teilen Xylol und Monomere: 10,78 Teile Methylmethacrylat, 25,5 Teile n-Butylmethacrylat, 17,39 Teile Styrol und 23,95 Teile Glycidylmethacrylat zudosiert. Anschließend wird auf 180°C erwärmt und im Vakuum < 100 mbar das Lösemittel abgezogen.
2. Vergleichsbeispiel: Pulverlack für spätere Verwendung in der Pulverdispersion
   77,5 Teile Acrylatharz, 18,8 Teile Dodecandisäure, 2 Teile Tinuvin 1130 (UV-Absorber), 0,9 Teile Tinuvin 144 (HALS) und 0,4 Teile Additol XL 490 (Verlaufsmittel) werden innig auf einem Henschel-Fluidmischer vermischt, auf einem BUSS PLK 46 Extruder extrudiert, auf einer Hosohawa ACM 2-Mühle vermahlen und über ein 125 µm Sieb abgesiebt.
3. Beispiel: Pulverlack für spätere Verwendung in der Pulverdispersion
   73,5 Teile Acrylharz, 17,8 Teile Dodecandisäure, 5,0 Teile Tris(Alkoxycarbonylamino)Triazin, 2 Teile Tinuvin 1130 (UV-Absorber), 0,9 Teile Tinuvin 144 (HALS) und 0,4 Teile Additol XL 490 (Verlaufsmittel) werden innig auf einem Henschel-Fluidmischer vermischt, auf einem BUSS PLK 46 Extruder extrudiert, auf einer Hosohawa ACM 2-Mühle vermahlen und über ein 125 µm Sieb abgesiebt.
4. Herstellung der Dispersion
   In 400 Teile entsalztes Wasser werden 0,6 Teile Troykyd D777 (Entschäumer), 0,6 Teile Orotan 731 K (Dispergierhilfsmittel), 0,06 Teile Surfinol TMN 6 (Netzmittel) und 16,5 Teile RM8 (Rohm & Haas, nichtionischer Assoziativ-Verdicker auf Polyurethanbasis) dispergiert. Dann werden in kleinen Portionen 94 Teile des Pulverklarlackes eingerührt. Anschließend werden noch einmal 0,6 Teile Troykyd D777, 0,6 Teile Orotan 731 K, 0,06 Teile Surfinol TMN 6 und 16,5 Teile RM8 eindispergiert. Abschließend werden in kleinen Portionen 94 Teile des Pulverklarlackes eingerührt. Das Material wird in einer Sandmühle 3,5 h gemahlen. Die abschließend gemessene durchschnittliche Teilchengröße beträgt 4 µm. Das Material wird durch einen 50 µm Filter filtriert und abschließend werden 0,05 % Byk 345 (Verlaufsmittel) zugesetzt.
5. Applikation der Dispersion
   Die Dispersion wird auf mit handelsüblichen Elektrotauchlack (kathodisch) beschichteten Stahltafeln mit einer Becherpistole appliziert. Das Blech wird 5 min. bei Raumtemperatur und 5 Min. bei 60 ° C abgelüftet. Anschließend wird bei einer Temperatur von 140 °C das Blech 30 min. eingebrannt.
6. Prüfung der Vergilbung der Pulverdispersion
   Von denen nach 4.0 präparierten Proben wird der Gelbwert nach DIN6127 bestimmt.
   Vergleich GW + 2,84
   Beispiel GW - 1,31.

## Patentansprüche

1. Pulverklarlackdispersion enthaltend eine feste, pulverförmige Komponente A und eine wäßrige Komponente B, wobei die Komponente A ein Pulverlack ist, enthaltend
a) wenigstens ein epoxidhaltiges Bindemittel mit einem Gehalt von 30 bis 45 Gew.%, vorzugsweise 30 bis 35 Gew.% an glycidylhaltigen Monomeren ggf. mit einem Gehalt an vinylaromatischen Verbindungen, vorzugsweise Styrol,
b) Tris(alkoxycarbonylamino)Triazin und Polycarbonsäuren,vorzugsweise geradkettige, aliphatische Dicarbonsäuren und/oder carboxyfunktionelle Polyester als Vernetzungsmittel und
c) ggf. Katalysatoren, Hilfsstoffe, pulverklarlacktypische Additive wie Entgasungsmittel,Verlaufsmittel,UV-Absorber, Radikalfänger, Antioxidantien und die Komponente B, eine wässrige Dispersion, enthaltend
a) wenigstens einen nicht-ionischen Verdicker und
b) ggf. Katalysatoren, Hilfsstoffe, Entschäumungsmittel, Netzmittel, Dispersionshilfsmittel, vorzugsweise carboxyfunktionelle Dispergiermittel, Antioxidantien, UV-Absorber, Radikalfänger, Biozide, geringe Mengen Lösemittel,Verlaufsmittel, Neutralisierungsmittel, vorzugsweise Amine und/oder Wasserrückhattemittel.

2. Pulverklarlackdispersionen nach Anspruch 1,
**dadurch gekennzeichnet, daß** der Gehalt glycidylhaltigen Monomeren an vorzugweise 25 bis 45Gew.% beträgt.

3. Pulverlack nach Anspruch 1,
**dadurch gekennzeichnete, daß** der Gehalt an glycidylhaltigen Monomeren bei 30 bis 45 Gew.% liegt.

4. Pulverlack nach Anspruch 1,
**dadurch gekennzeichnet, daß** der Gehalt an glycidylhaltigen Monomeren bei 30 bis 35 Gew.% liegt.

5. Pulverlackdispersion nach einem der Ansprüche 1 bis 4,
**dadurch gekennzeichnet, daß** er 0,5-15 Gew.-%, vorzugsweise 1 bis 10 Gew.-% Tris(alkoxycarbonylamino)Triazin enthält.

6. Pulverklarlackdispersion nach einem der Ansprüche 1 bis 5,
**dadurch gekennzeichnet, daß** der Gehalt an vinylaromatischen Verbindungen höchstens 35, vorzugsweise 10 - 25 Gew.% beträgt, bezogen auf Komponente a).

7. Pulverklarlackdispersion nach einem der Ansprüch 1 bis 6,
**dadurch gekennzeichnet, daß** die epoxidfunktionellen Bindemittel epoxidgruppenhaltige Polyacrylatharze sind, wobei die eingesetzten epoxidfunktionellen Monomere vorzugsweise Glycidylacrylat, Glycidylmethacrylat und Allylglycidylether sind.

8. Pulverklarlackdispersion nach einem der Ansprüche 1 bis 7,
**dadurch gekennzeichnet, daß** er als wäßrige Dispersion vorliegt, deren pH-Wert zwischen 4,0 - 7,0, vorzugsweise 5,5 und 6,5 liegt.

9. Pulverklarlackdispersion nach einem der Ansprüche 1 bis 8,
**dadurch gekennzeichnet, daß** die Korngröße höchstens 20 µm, vorzugsweise 2 bis 10 µm ist.

10. Pulverklarlackdispersion nach einem der Ansprüche 1 bis 9,
**dadurch gekennzeichnet, daß** die Komponente B als nicht-ionischen Verdicker a) mindestens einen nicht-ionischen Assoziativ-Verdicker enthält der als Strukturmerkmale:
aa) ein hydrophiles Gerüst und
ab) hydrophobe Gruppen, die zu einer assoziativen Wechselwirkung im wässrigen Medium fähig sind,
enthält.

11. Pulverklarlack nach Anspruch 10,
**dadurch gekennzeichnet, daß** der nicht-ionische Assoziativ-Verdicker a) in der Dispersion als hydrophiles Gerüst aa) Polyurethanketten enthält.

12. Pulverklarlack nach Anspruch 11,
**dadurch gekennzeichnet, daß** der nicht-ionische Assoziativ-Verdicker a) in der Dispersion als hydrophiles Gerüst aa) Polyurethanketten mit Polyetherbausteinen enthält

13. Verfahren zur Herstellung einerPulverlackdispersion,
**dadurch gekennzeichnet, daß**
I. aus einer festen, pulverförmigen Komponente A und einer wäßrigen Komponente B eine Dispersion hergestellt wird, wobei
die Komponente A ein Pulverklarlack ist, enthaltend
a) wenigstens ein epoxidhaltiges Bindemittel mit einem Gehalt von 30 bis 45 Gew.%, vorzugsweise 30 bis 35 Gew.% an glycidylhaitigen Monomeren ggf. mit einem Gehalt an vinylaromatischen Verbindungen, vorzugsweise Styrol,
b) Tris(alkoxycarbonylamino)Triazin und Polycarbonsäuren, vorzugsweise geradkettige, aliphatische Dicarbonsäuren und/oder carboxyfunktionelle Polyester als Vernetzungsmittel und
c) ggfs Katalysatoren, Hilfsstoffe, pulverklarlacktypische Additive, wie Entgasungsmittel,Verlaufsmittel,UV-Absorber, Radikalfänger, Antioxidantien
und
die Komponente B eine wäßrige Dispersion ist enthaltend
a) wenigstens einen nicht-ionischen Verdicker und
b) ggf. Katalysatoren, Hilfsstoffe, Entschäumungsmittel, Dispersionshilfsmittel, Netzmittel, vorzugsweise carboxyfunktionelle Dispergiermittel, Antioxidantien, UV-Absorber, Verlaufhilfsmittel, Neutralisationsmittel, vorzugsweise Amine, Radikalfänger, geringe Mengen Lösemittel, Biozide und/oder Wasserrückhaltemittel,
II. die aus den Komponenten A und B hergestellte Dispersion ggf. vermahlen wird,
III. der pH-Wert der Dispersion auf 4,0 bis 7,0, vorzugsweise 5,5 bis 6,5 eingestellt und
filtriert wird.

14. Verfahren nach Anspruch 13,
**dadurch gekennzeichnet, daß** die Pulverklarlackdispersion aus den Komponenten A und B durch Naßvermahlung hergestellt wird.

15. Verwendung der Pulverklarlackdispersion nach einem der Ansprüche 1 bis 14 zur Beschichtung von lackierten und nicht lackierten Automobilkarosserien aus Metallblech und/oder Kunststoff mittels elektrostatisch unterstützter Hochrotation oder pneumatischer Applikation.

## Claims

1. Transparent powder coating dispersion comprising a solid, pulverulent component A and an aqueous component B, component A being a powder coating material comprising
a) at least one epoxy-containing binder having a content of from 30 to 45%, preferably from 30 to 35%, of glycidyl-containing monomers, with or without a content of vinylaromatic compounds, preferably styrene,
b) tris(alkoxycarbonylamino)triazine and polycarboxylic acids, preferably straight-chain aliphatic dicarboxylic acids and/or carboxy-functional polyesters, as crosslinking agents, and
c) if desired, catalysts, auxiliaries, additives typical for transparent powder coating materials, such as degassing agents, levelling agents, UV absorbers, free-radical scavengers, antioxidants, and component B being an aqueous dispersion comprising
a) at least one nonionic thickener and
b) if desired, catalysts, auxiliaries, defoamers, wetting agents, dispersing auxiliaries, preferably carboxy-functional dispersants, antioxidants, UV absorbers, free-radical scavengers, biocides, small amounts of solvent, levelling agents, neutralizing agents, preferably amines, and/or water retention agents.

2. Transparent powder coating dispersion according to Claim 1, **characterized in that** the content of glycidyl-containing monomers is preferably from 25 to 45% by weight.

3. Powder coating material according to Claim 1, **characterized in that** the content of glycidyl-containing monomers lies at from 30 to 45% by weight.

4. Powder coating material according to Claim 1, **characterized in that** the content of glycidyl-containing monomers lies at from 30 to 35% by weight.

5. Powder coating dispersion according to one of Claims 1 to 4, **characterized in that** it comprises 0.5-15% by weight, preferably from 1 to 10% by weight, of tris(alkoxycarbonylamino)triazine.

6. Transparent powder coating dispersion according to one of Claims 1 to 5, **characterized in that** the content of vinylaromatic compounds is not more than 35, preferably 10 - 25% by weight, based on component a).

7. Transparent powder coating dispersion according to one of Claims 1 to 6, **characterized in that** the epoxy-functional binders are epoxy-functional polyacrylate resins, the epoxy-functional monomers employed preferably being glycidyl acrylate, glycidyl methacrylate and allyl glycidyl ether.

8. Transparent powder coating dispersion according to one of Claims 1 to 7, **characterized in that** it is present as an aqueous dispersion whose pH lies between 4.0 - 7.0, preferably 5.5 and 6.5.

9. Transparent powder coating dispersion according to one of Claims 1 to 8, **characterized in that** the particle size is not more than 20 µm, preferably from 2 to 10 µm.

10. Transparent powder coating dispersion according to one of Claims 1 to 9, **characterized in that** component B comprises as nonionic thickener a) at least one nonionic associative thickener comprising as structural features:
aa) a hydrophilic framework and
ab) hydrophobic groups capable of associative interaction in an aqueous medium.

11. Transparent powder coating material according to Claim 10, **characterized in that** the nonionic associative thickener a) in the dispersion comprises polyurethane chains as hydrophilic framework aa).

12. Transparent powder coating material according to Claim 11, **characterized in that** the nonionic associative thickener a) in the dispersion comprises polyurethane chains having polyether units as hydrophilic framework aa).

13. Process for preparing a powder coating dispersion, **characterized in that**
I. from a solid, pulverulent component A and an aqueous component B a dispersion is prepared,
component A being a transparent powder coating material comprising
a) at least one epoxy-containing binder having a content of from 30 to 45%, preferably from 30 to 35%, by weight of glycidyl-containing monomers, with or without a content of vinylaromatic compounds, preferably styrene,
b) tris(alkoxycarbonylamino)triazine and polycarboxylic acids, preferably straight-chain aliphatic dicarboxylic acids and/or carboxy-functional polyesters, as crosslinking agents, and
c) if desired, catalysts, auxiliaries, additives typical for transparent powder coatings, such as degassing agents, levelling agents, UV absorbers, free-radical scavengers, antioxidants,
and
component B being an aqueous dispersion comprising
a) at least one nonionic thickener and
b) if desired, catalysts, auxiliaries, defoamers, dispersing auxiliaries, wetting agents, preferably carboxy-functional dispersants, antioxidants, UV absorbers, levelling agents, neutralizing agents, preferably amines, free-radical scavengers, small amounts of solvent, biocides, and/or water retention agents,
II. the dispersion prepared from component A and B is ground, if desired,
III. the pH of the dispersion is adjusted to from 4.0 to 7.0, preferably from 5.5 to 6.5, and the composition is filtered.

14. Process according to Claim 13, **characterized in that** the transparent powder coating dispersion is prepared from components A and B by wet grinding.

15. Use of the transparent powder coating dispersion according to one of Claims 1 to 14 for coating coated and uncoated car bodies made from metal sheet and/or plastic by means of electrostatically assisted high-speed rotation or pneumatic application.

## Revendications

1. Dispersion de vernis en poudre contenant un composant solide pulvérulent A et un composant aqueux B, le composant A étant un vernis en poudre contenant
a) au moins un liant contenant des groupes époxy, ayant une teneur de 30 à 45 % en poids, de préférence de 30 à 35 % en poids, en monomères contenant des groupes glycidyle, éventuellement avec une teneur en composés vinylaromatiques, le styrène de préférence,
b) une tris(alcoxycarbonylamino)triazine et des acides polycarboxyliques, de préférence des acides dicarboxyliques aliphatiques à chaîne droite et/ou des polyesters à fonction carboxy, en tant qu'agent de réticulation et
c) éventuellement des catalyseurs, adjuvants, additifs caractéristiques de vernis en poudre, tels qu'agents de dégazage, agents d'étalement, absorbeurs d'UV, capteurs de radicaux, antioxydants
et le composant B étant une dispersion aqueuse contenant
a) au moins un épaississant non ionique et
b) éventuellement des catalyseurs, adjuvants, antimousses, agents mouillants, agents auxiliaires de dispersion
de préférence des dispersants à fonction carboxy, des antioxydants, des absorbeurs d'UV,
des capteurs de radicaux, des biocides, de faibles quantités de solvant, d'agents d'étalement, d'agents de neutralisation, de préférence des amines, et/ou des agents de rétention d'eau.

2. Dispersions de vernis en poudre selon la revendication 1, **caractérisées en ce que** la teneur en monomères contenant des groupes glycidyle va de préférence de 25 à 45 % en poids.

3. Vernis en poudre selon la revendication 1, **caractérisé en ce que** la teneur en monomères contenant des groupes glycidyle va de 30 à 45 % en poids.

4. Vernis en poudre selon la revendication 1, **caractérisé en ce que** la teneur en monomères contenant des groupes glycidyle va de préférence de 30 à 35 % en poids.

5. Dispersion de vernis en poudre selon l'une quelconque des revendications 1 à 4, **caractérisée en ce qu'**elle contient de 0,5 à 15 % en poids, de préférence de 1 à 10 % en poids, de tris(alcoxycarbonylamino)triazine.

6. Dispersion de vernis en poudre selon l'une quelconque des revendications 1 à 5, **caractérisée en ce que** la teneur en composés vinylaromatiques est au maximum de 35, de préférence de 10 à 25 % en poids, par rapport au composant a).

7. Dispersion de vernis en poudre selon l'une quelconque des revendications 1 à 6, **caractérisée en ce que** les liants à fonction époxy sont des résines polyacrylate contenant des groupes époxy, les monomères à fonction époxy utilisés étant de préférence l'acrylate de glycidyle, le méthacrylate de glycidyle et l'allylglycidyléther.

8. Dispersion de vernis en poudre selon l'une quelconque des revendications 1 à 7, **caractérisée en ce qu'**elle se trouve sous forme de dispersion aqueuse dont le pH est compris entre 4,0 et 7,0, de préférence entre 5,5 et 6,5.

9. Dispersion de vernis en poudre selon l'une quelconque des revendications 1 à 8, **caractérisée en ce que** la taille de grain est au maximum de 20 µm, de préférence va de 2 à 10 µm.

10. Dispersion de vernis en poudre selon l'une quelconque des revendications 1 à 9, **caractérisée en ce que** le composant B contient en tant qu'épaississant non ionique a) au moins un épaississant associatif non ionique qui comporte comme caractéristiques structurales :
aa) un squelette hydrophile et
ab) des groupes hydrophobes qui sont capables d'une interaction associative dans le milieu aqueux.

11. Vernis en poudre selon la revendication 10, **caractérisé en ce que** l'épaississant associatif non ionique a) dans la dispersion contient, en tant que squelette hydrophile, aa) des chaînes polyuréthannes.

12. Vernis en poudre selon la revendication 11, **caractérisé en ce que** l'épaississant associatif non ionique a) dans la dispersion contient, en tant que squelette hydrophile aa), des chaînes polyuréthannes comportant des composants polyéthers.

13. Procédé pour la préparation d'une dispersion de vernis en poudre, **caractérisé en ce que**
I. on prépare une dispersion à partir d'un composant solide pulvérulent A et d'un composant aqueux B,
le composant A étant un vernis en poudre contenant
a) au moins un liant contenant des groupes époxy, ayant une teneur de 30 à 45 % en poids, de préférence de 30 à 35 % en poids, en monomères contenant des groupes glycidyle, éventuellement avec une teneur en composés vinylaromatiques, le styrène de préférence,
b) une tris(alcoxycarbonylamino)triazine et des acides polycarboxyliques, de préférence des acides dicarboxyliques aliphatiques à chaîne droite et/ou des polyesters à fonction carboxy, en tant qu'agent de réticulation et
c) éventuellement des catalyseurs, adjuvants, additifs caractéristiques de vernis en poudre, tels qu'agents de dégazage, agents d'étalement, absorbeurs d'UV, capteurs de radicaux, antioxydants
et
le composant B étant une dispersion aqueuse contenant
a) au moins un épaississant non ionique et
b) éventuellement des catalyseurs, adjuvants, antimousses, agents auxiliaires de dispersion, agents mouillants, de préférence des dispersants à fonction carboxy, des antioxydants, des absorbeurs d'UV, des agents d'étalement, des agents de neutralisation, de préférence des amines, des capteurs de radicaux, de faibles quantités de solvant, de biocides, et/ou des agents de rétention d'eau,
II. la dispersion préparée à partir des composants A et B est éventuellement broyée,
III. on ajuste le pH de la dispersion à 4,0-7,0, de préférence à 5,5-6,5 et
on filtre.

14. Procédé selon la revendication 13, **caractérisé en ce que** la dispersion de vernis en poudre est préparée à partir des composants A et B par broyage par voie humide.

15. Utilisation de la dispersion du vernis en poudre selon l'une quelconque des revendications 1 à 14, pour le revêtement de carrosseries d'automobiles à base de tôle métallique et/ou de matière plastique, peintes ou non peintes, par application pneumatique ou application rotative à support électrostatique.
